# EUROPÄISCHE PATENTANMELDUNG

(11) **EP 3 199 595 A1**
(43) Veröffentlichungstag der Anmeldung: **02.08.2017**
(21) Anmeldenummer: 16000192.1
(22) Anmeldetag: 27.01.2016
(51) Int. Cl.: C09C 1/36, C01G 23/08, B02C 17/20, B02C 21/00, B02C 17/16

(54) **HERSTELLUNG VON TITANDIOXIDPIGMENT NACH DEM SULFATVERFAHREN MIT ENGER PARTIKELGRÖSSENVERTEILUNG**

(71) Anmelder: Kronos International, Inc., 51373 Leverkusen (DE)
(72) Erfinder: Juergens, Volker, 57399 Kirchhundem (DE); Bluemel, Siegfried, 40883 Ratingen (DE); Abdin, Achim, 26854 Nordenham (DE); Friedrich, Jörg, 42799 Leichlingen (DE); Schmitt, Volker, 42799 Leichlingen (DE)

(57) **Zusammenfassung**

Die Erfindung richtet sich auf ein Verfahren zur Herstellung von aus dem Sulfatverfahren entstammenden Titandioxidpigment-Partikeln mit enger Partikelgrößenverteilung, die insbesondere geeignet sind zur Verwendung in Beschichtungen und Druckfarben.

Das Verfahren zeichnet sich dadurch aus, dass die Partikel vor der Nachbehandlung einer Nassmahlung unterzogen werden, die als Passagenmahlung in einer Kaskade von mindestens drei Rührwerkskugelmühlen durchgeführt wird und wobei die Mahlkörper der ersten Rührwerkskugelmühle einen größeren Durchmesser und/oder eine höhere Dichte aufweisen als die Mahlkörper der zweiten oder folgenden Rührwerkskugelmühle.

## Beschreibung

### Gebiet der Erfindung

Die Erfindung richtet sich auf ein Verfahren zur Herstellung von aus dem Sutfatverfahren entstammenden Titandioxidpigment-Partikeln mit enger Partikelgrößenverteilung, die insbesondere geeignet sind zur Verwendung in Beschichtungen und Druckfarben.

### Technologischer Hintergrund der Erfindung

Titandioxidpigment in der Rutilform wird kommerziell üblicherweise entweder nach dem Chloridverfahren oder dem Sulfatverfahren hergestellt. Rutil-Titandioxidpigment-Partikel, die dem Sulfatverfahren entstammen, weisen generell eine geringere Härte auf als Rutil-Titandioxidpigment-Partikel, die nach dem Chloridverfahren hergestellt sind. Sie sind deswegen u.a. besser geeignet zur Verwendung in Druckfarben.

Bei der Herstellung nach dem Chloridverfahren wird der Eisen-Titan-haltige Rohstoff mit Chlorgas zur Reaktion gebracht und das entstandene Titantetrachlorid anschließend zu Titandioxid (Titandioxid-Grundkörper) oxidiert. Bei der Herstellung nach dem Sulfatverfahren wird der Eisen-Titan-haltige Rohstoff in konzentrierter Schwefelsäure aufgeschlossen und Titanylsulfat gebildet. Das Titanylsulfat wird hydrolysiert und in einem Drehrohrofen calciniert, wobei sich Titandioxid (Titandioxid-Grundkörper) bildet. Der Titandioxid-Grundkörper besteht zum großen Teil aus Agglomeraten von Primärpartikeln, die vor der Weiterverarbeitung möglichst weitgehend deagglomeriert werden müssen. Der Titandioxid-Grundkörper aus dem Sulfatverfahren weist üblicherweise eine breitere Partikelgrößenverteilung auf als der Titandioxid-Grundkörper aus dem Chloridverfahren. Zur Deagglomeration werden die Titandioxid-Grundkörperpartikel im weiteren zu einer Suspension angeteigt und einer Nassmahlung unterzogen, beispielsweise in einer Rührwerkskugelmühle. Anschließend werden die Partikel je nach Anwendungsfeld einer anorganischen und/oder organischen Nachbehandlung unterzogen.

Für den Einsatz in Druckfarben und in Beschichtungen allgemein sind insbesondere optische Eigenschaften wie Deckvermögen (TS: Tihting Strength) und Glanz von entscheidender Bedeutung. Deckvermögen und Glanz werden u.a. von der Breite der Partikelgrößenverteilung bestimmt, wobei zu feine Anteile in der Partikelgrößenverteilung das Deckvermögen beeinträchtigen und grobe Partikel den Glanz mindern. Wünschenswert ist somit eine möglichst enge Partikelgrößenverteilung und eine optimierte mittlere Partikelgröße. Die mittlere Partikelgröße und die Breite der Partikelgrößenverteilung kann durch die Art der Nassmahlung beeinflusst werden. Üblicherweise wird die Nassmahlung so durchgeführt, dass die Partikelsuspension in einem Durchgang (eine Passage) durch die Rührwerkskugelmühle gefördert wird, wobei eine relativ breite Partikelgrößenverteilung erzeugt wird. Darüber hinaus ist jedoch bekannt, dass eine mehrfache Förderung durch die Rührwerkskugelmühle entweder im Kreislauf (Kreislaufmahlung) oder in Form von mehreren Chargen (Mehrpassagenmahlung) zu einer engeren Partikelgrößenverteilung führt.

### Aufgabenstellung und Kurzbeschreibung der Erfindung

Der Erfindung liegt die Aufgabe zugrunde, ein Verfahren bereitzustellen, mit Hilfe dessen Titandioxidpartikel, die dem Sulfatverfahren entstammen, mit einer engen Partikelgrößenverteilung und besonderer Eignung für die Verwendung in Beschichtungen und insbesondere in Druckfarben hergestellt werden können.

Die Aufgabe wird gelöst durch ein Verfahren zur Herstellung eines Titandioxidpigments, wobei Titandioxidpartikel aus dem Sulfatverfahren vor der Nachbehandlung in wässriger Suspension gemahlen werden, dadurch gekennzeichnet, dass die Nassmahlung als Passagenmahlung in einer Kaskade von mindestens drei Rührwerkskugelmühlen durchgeführt wird und wobei die Mahlkörper der ersten Rührwerkskugelmühle einen größeren Durchmesser und/oder eine höhere Dichte aufweisen als die Mahlkörper der zweiten oder folgenden Rührwerkskugelmühle.

Weitere vorteilhafte Ausformungen der Erfindung sind in den Unteransprüchen angegeben.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Erfahrungsgemäß werden bei der Nassvermahlung einer Titandioxidpartikel-Suspension in einer Rührwerkskugelmühle (im Folgenden auch: Sandmühle) die Partikelagglomerate weitgehend deagglomeriert und die Primärpartikel zu einem gewissen Anteil weiter zerkleinert. Hierbei besteht ein Unterschied zwischen Titandioxidpartikeln aus dem Sulfatverfahren und Titandioxidpartikeln aus dem Chloridverfahren, wobei die erstgenannten Partikel leichter zerkleinert werden. Im Folgenden wird die Verarbeitung in der Rührwerkskugelmühle als "Mahlung" oder "Nassmahlung" bezeichnet.

Die vorliegende Erfindung geht von der Erfahrung aus, dass eine Mehrpassagenmahlung gegenüber einer Kreislaufmahlung in einer Rührwerkskugelmühle eine engere Verweilzeitverteilung für die Partikel und damit eine engere Partikelgrößenverteilung liefert. Die Erfindung basiert weiter auf der Erkenntnis, dass die während der Mahlung auf die Partikel einwirkende kinetische Energie der Mahlkörper eine Funktion der Mahlkörpergröße und der Mahlkörperdichte ist. Gleichzeitig ist der Zerkleinerungsfortschritt eine Funktion der Anzahl der Mahlkörper-Partikel-Kontakte, welche mit abnehmender Mahlkörpergröße zunehmen.

Erfindungsgemäß wird eine Suspension ungemahlener Titandioxidpartikel aus dem Sulfatverfahren in der ersten Passage einer Nassmahlung in einer Rührwerkskugelmühle mit Mahlkörpern unterzogen, die einen größeren Durchmesser und/oder eine größere Dichte aufweisen als die Mahlkörper, die in der zweiten oder folgenden Passage eingesetzt werden. Auf diese Weise werden die Mahlkörper in der Rührwerksmühle der zweiten und folgenden Passage dem Zerkleinerungsfortschritt und der infolgedessen sinkenden Viskosität der Partikelsuspension angepasst und somit eine Optimierung der eingebrachten Energiemenge erreicht. Gleichzeitig werden eine Übermahlung der Partikel und die Erzeugung von unerwünschtem Feinanteil (< 0,2 µm) minimiert.

Die Mehrpassagenmahlung bietet die Möglichkeit, sowohl horizontal wie vertikal aufgestellte Mühlen einzusetzen.
Horizontal aufgestellte, geschlossene Rührwerkskugelmühlen können im Gegensatz zu vertikal aufgestellten, offenen Mühlen auch bei erhöhter Viskosität der Suspension mit relativ großen Durchsatzmengen betrieben werden, beispielsweise mit 15 bis 18 m³/h. Vertikale offene Mühlen können dagegen üblicherweise nur mit einem Durchsatz bis etwa 8 m³/h gefahren werden.

Erfindungsgemäß wird eine Suspension von aus dem Sulfatverfahren stammenden Titandioxidgrundkörper-Partikeln, die noch nicht nachbehandelt sind, eingesetzt. Die Partikelsuspension weist im ungemahlenen Zustand einen höheren Anteil an Agglomeraten und eine höhere Viskosität auf.

In einer besonderen Ausführung der Erfindung wird ein Titandioxidgrundkörper eingesetzt, der vor der erfindungsgemäßen Nassmahlung einen SC-Wert von <4,5 aufweist. Als SC-Wert wird im Rahmen der Erfindung der negative b*-Wert bezeichnet, welcher gemäß DIN 53165 als Blaustich einer Lackzusammensetzung, die aus Titandioxid und Schwarzpaste besteht (sogenannter MAB-Test), gemessen wird.
Üblicherweise liegt der SC-Wert für Titandioxidgrundkörper aus dem Sulfatverfahren bei >4,5 bevorzugt 5 bis 7. Mit dem niedrigeren SC-Wert von <4,5 ist eine erhöhte Härte der Partikel und eine erhöhte Partikelgröße verbunden.
Ein SC-Wert von <4,5 kann im Sulfatverfahren beispielsweise durch längere Calcinierzeiten, oder höhere Calciniertemperaturen erreicht werden.

Die in der ersten Passage eingesetzten Mahlkörper sind größer und/oder weisen eine höhere Dichte auf als die in der zweiten oder folgenden Passage verwendeten. Beispielsweise werden in der ersten Passage in der Rührwerkskugelmühle keramische Mahlkörper eingesetzt wie etwa Mahlkörper aus Aluminiumoxid, Zirkonsilikat oder Zirkonoxid. Bevorzugt weisen die Mahlkörper einen Durchmesser im Bereich von 0,6 bis 1,2 mm auf. Die Mahlung der ersten Passage wird auch als Vormahlung bezeichnet.

In einer besonderen Ausführung der Erfindung wird die Mahlung der ersten Passage in einer geschlossenen und gegebenenfalls horizontal aufgestellten Rührwerkskugelmühle (im Folgenden auch: Sandmühle) durchgeführt.
Bevorzugt wird der Suspension zudem ein übliches Dispergiermittel, insbesondere Hexametaphosphat zugesetzt. Dem Fachmann sind übliche Dispergiermittel bekannt.

In einem weiteren Schritt (weitere Passage), bevorzugt an den ersten Schritt (erste Passage) anschließend, werden Mahlkörper geringerer Größe und/oder geringerer Dichte eingesetzt. Gegenüber keramischen Mahlkörpern weist beispielsweise Sand eine geringere Dichte auf. Insbesondere Ottawasand ist geeignet, beispielsweise mit einem Durchmesser von 0,6 bis 0,8 mm oder 0,4 bis 0,6 mm.

Die zweite und weitere Passagenmahlung kann in einer horizontalen oder vertikalen Sandmühle stattfinden. Bei dem Einsatz von Ottawasand ist die vertikal aufgestellte Sandmühle bevorzugt, weil bei der horizontal aufgestellten Mühle vermehrt Sandbruch auftritt und das Austragssystem der Sandmühle verstopft.
Eine senkrecht aufgestellte Sandmühle für die zweite Passage kann offen konstruiert sein.

Erfindungsgemäß kann die dritte Passagenmahlung ebenfalls in einer vertikalen Sandmühle durchgeführt werden.

In einer bevorzugten Ausführung der Erfindung wird die Mahlung so durchgeführt, dass die erste Rührwerkskugelmühle mit Zirkonsilikat- oder Zirkonoxidperlen der Größe 0,6 bis 0,8 mm, die zweite Rührwerkskugelmühle mit Ottawasand der Größe 0,6 bis 0,8 mm und die dritte Rührwerkskugelmühle mit Ottawasand der Größe 0,4 bis 0,6 mm befüllt ist.

Die erfindungsgemäße Verfahrensweise ermöglicht in jeder der bevorzugten drei Mahlpassagen große Durchsatzmengen, so dass die Verweilzeit innerhalb der Mühlen verkürzt und so eine Übermahlung der Partikel verhindert wird.
Vorzugsweise wird das erfindungsgemäße Verfahren so durchgeführt, dass in der ersten Passage der Durchsatz pro Stunde mehr als das 15fache, insbesondere mehr als das 20fache und besonders bevorzugt etwa das 30- bis 35fache des Mühlenvolumens beträgt.

Des Weiteren kann zwischen den Mahlpassagen weiteres Dispergiermittel zugesetzt werden. Weiterhin kann mit NaOH ein optimaler pH-Wert und damit eine optimale Viskosität von 50 bis 500 mPas, bevorzugt 100 bis 200 mPas eingestellt werden.

Im Anschluss an die Nassmahlung werden die Titandioxidpigment-Partikel auf übliche Art und Weise anorganisch und/oder organisch nachbehandelt. Üblicherweise handelt es sich bei der anorganischen Nachbehandlung um eine Beschichtung mit anorganischen Oxiden bzw. wasserhaltigen Oxiden wie SiO₂, Al₂O₃, ZrO₂ etc. Es kann sich um dichte oder eher lockere Beschichtungen handeln. In einer besonderen Ausführung werden die Pigmentpartikel mit Aluminiumoxid behandelt, bevorzugt in einem mehrstufigen Verfahren. Dem Fachmann sind die in der TiO₂-Verfahrenstechnik üblichen Nachbehandlungsverfahren vertraut.

Abschließend werden die nach behandelten TiO₂-Pigmentpartikel üblicherweise in einer Dampfstrahlmühle mikronisiert. In die Dampfstrahlmühle kann währenddessen optional eine hydrophile organische Verbindung als Mahlhilfsmittel wie beispielsweise 1,1,1-Trimethylolpropan (TMP) zugegeben werden. Dem Fachmann sind weitere geeignete organische Additive bekannt. Die Menge an zugegebenem Mahlhilfsmittel gerechnet als Kohlenstoff sollte bevorzugt im Bereich von 0,05 bis 0,50 Gew.-% C bevorzugt 0,18 bis 0,35 Gew.-% C bezogen auf TiO₂ liegen.

In einer weiteren Ausführung der Erfindung werden die Titandioxidpartikel vor der Nassmahlung einer Trockenmahlung unterzogen, vorzugsweise in einer Pendelmühle oder einer Gutbettwalzenmühle. Die Trockenmahlung ermöglicht das Aufbrechen harter Partikelagglomerate, die während der Nassmahlung in der Rührwerkskugelmühle nicht deagglomeriert werden können. Während der Trockenmahlung kann ein Mahlhilfsmittel wie beispielsweise 1,1,1-Trimethylolpropan (TMP) oder Trimethylolethan (TME) oder artverwandte Substanzen zugesetzt werden. Die bevorzugte Menge liegt bei 0,03 bis 0,3 Gew.-% insbesondere 0,04 bis 0,1 Gew.-% gerechnet als Kohlenstoff und bezogen auf TiO₂.

Das erfindungsgemäße Verfahren ermöglicht die Herstellung von Titandioxidpigment, welches besonders für Beschichtungen allgemein und insbesondere für Druckfarben geeignet ist.

## Patentansprüche

1. Verfahren zur Herstellung eines Titandioxidpigments, wobei Titandioxidpartikel aus dem Sulfatverfahren vor der Nachbehandlung in wässriger Suspension gemahlen werden, **dadurch gekennzeichnet, dass** die Nassmahlung als Passagenmahlung in einer Kaskade von mindestens drei Rührwerkskugelmühlen durchgeführt wird und
wobei die Mahlkörper der ersten Rührwerkskugelmühle einen größeren Durchmesser und/oder eine höhere Dichte aufweisen als die Mahlkörper der zweiten oder folgenden Rührwerkskugelmühle.

2. Verfahren nach Anspruch 1 **dadurch gekennzeichnet, dass**
zumindest die erste Rührwerkskugelmühle mit einem Durchsatz pro Stunde von mehr als dem 15fachen, insbesondere mehr als dem 20fachen und besonders bevorzugt etwa dem 30- bis 35fachen des Mühlenvolumens betrieben wird.

3. Verfahren nach Anspruch 1 oder 2 **dadurch gekennzeichnet, dass**
zumindest die erste Rührwerkskugelmühle horizontal und mindestens eine der weiteren Rührwerkskugelmühlen vertikal aufgestellt ist.

4. Verfahren nach einem oder mehreren der Ansprüche 1 bis 3 **dadurch gekennzeichnet, dass**
die erste Rührwerkskugelmühle horizontal aufgestellt ist und die zweite und die dritte Rührwerkskugelmühle vertikal aufgestellt sind.

5. Verfahren nach einem oder mehreren der Ansprüche 1 bis 4 **dadurch gekennzeichnet, dass**
die erste Rührwerkskugelmühle mit keramischen Mahlkörpern, die eine Größe im Bereich von 0,6 bis 1,2 mm aufweisen, befüllt ist.

6. Verfahren nach einem oder mehreren der Ansprüche 1 bis 5 **dadurch gekennzeichnet, dass**
die erste Rührwerkskugelmühle mit Zirkonsilikatperlen der Größe 0,6 bis 0,8 mm, die zweite Rührwerkskugelmühle mit Ottawasand der Größe 0,6 bis 0,8 mm und die dritte Rührwerkskugelmühle mit Ottawasand der Größe 0,4 bis 0,6 mm befüllt ist.

7. Verfahren nach einem oder mehreren der Ansprüche 1 bis 6 **dadurch gekennzeichnet, dass**
die Suspension ein Dispergiermittel, insbesondere Hexametaphosphat enthält.

8. Verfahren nach einem oder mehreren der Ansprüche 1 bis 7 **dadurch gekennzeichnet, dass**
die Titandioxidpartikel vor der Nassmahlung einen SC-Wert (MAB-Test) von <4,5 aufweisen.

9. Verfahren nach einem oder mehreren der Ansprüche 1 bis 8 **dadurch gekennzeichnet, dass**
die Titandioxidpartikel vor der Nassmahlung einer Trockenmahlung in einer Pendelmühle oder Gutbettwalzenmühle unterzogen werden.

10. Verfahren nach Anspruch 9 **dadurch gekennzeichnet, dass**
bei der Trockenmahlung ein Mahlhilfsmittel, insbesondere 1,1,1-Trimethylolpropan (TMP) zugesetzt wird.

11. Verfahren nach Anspruch 10 **dadurch gekennzeichnet, dass**
0,03 bis 0,3 Gew.-% insbesondere 0,04 bis 0,1 Gew.-% TMP gerechnet als Kohlenstoff und bezogen auf TiO₂ zugesetzt wird.

12. Verfahren nach einem oder mehreren der Ansprüche 1 bis 11 **dadurch gekennzeichnet, dass**
im Anschluss an die Nassmahlung die Titandioxidpartikel mit Aluminiumoxid nachbehandelt werden, bevorzugt in einem mehrstufigen Verfahren.

13. Verfahren nach Anspruch 12 **dadurch gekennzeichnet, dass**
die Titandioxidpartikel im Anschluss in einer Dampfstrahlmühle mikronisiert werden und währenddessen eine hydrophile organische Verbindung, insbesondere 1,1,1-Trimethylolpropan (TMP) zugesetzt wird.

14. Verwendung des Titandioxidpigments nach Anspruch 1 bis 13 in Beschichtungen und Druckfarben.
